Europäisches Patentamt

European Patent Office

Office européen des brevets

(19)

(11) Numéro de publication : **0 381 566 B1**

(12) # FASCICULE DE BREVET EUROPEEN

(45) Date de publication du fascicule du brevet :
22.07.92 Bulletin 92/30

(51) Int. Cl.⁵ : **B60G 21/055**

(21) Numéro de dépôt : **90400232.6**

(22) Date de dépôt : **26.01.90**

(54) **Palier de barre de torsion.**

(30) Priorité : **31.01.89 FR 8901188**

(43) Date de publication de la demande :
**08.08.90 Bulletin 90/32**

(45) Mention de la délivrance du brevet :
**22.07.92 Bulletin 92/30**

(84) Etats contractants désignés :
**DE ES FR GB IT**

(56) Documents cités :
**EP-A- 0 132 502
DE-A- 2 358 736
GB-A- 2 074 696
US-A- 2 761 714**

(73) Titulaire : **HUTCHINSON
2 rue Balzac
F-75008 Paris (FR)**

(72) Inventeur : **Domer, Michel
La Cour aux Fleurs, Pouilly
F-60970 Valdampierre (FR)**

(74) Mandataire : **Picard, Jean-Claude Georges et al
Cabinet Plasseraud 84, rue d'Amsterdam
F-75009 Paris (FR)**

EP 0 381 566 B1

Jouve, 18, rue Saint-Denis, 75001 PARIS

## Description

La présente invention concerne un palier de barre de torsion, en particulier de barre antidévers pour véhicule automobile, du type comprenant :

– une armature relativement rigide, constituée de deux demi-coquilles opposées de forme générale semi-cylindrique lui permettant d'être montée puis refermée sur une barre de torsion, et

– des nervures en matériau élastique, solidaires de la face intérieure de ladite armature et s'étendant sensiblement selon des génératrices desdites demi-coquilles, ces nervures étant propres à pincer la barre lorsque ladite armature est refermée sur elle.

Parmi les paliers de barre antidévers connus pour véhicules automobiles, certains permettent à la barre d'y tourillonner, mais cela nécessite que la barre présente un excellent état de surface dans les zones correspondantes, ce à quoi il est difficile de parvenir. En outre, ces paliers étant soumis aux projections de la route, ils doivent être étanches, ce qui est un gros problème. Enfin, et sauf complication importante, ces paliers n'assurent pas le bridage axial -- souvent souhaitable -- de la barre antidévers.

D'autres paliers, au contraire, sont bloqués sur la barre, avec travail en torsion du matériau élastique intermédiaire, ce qui assure en outre le bridage axial souhaité. Ces paliers ne peuvent être enfilés sur les barres, ne serait-ce qu'à cause des formes diverses que peuvent prendre leurs extrémités. On doit alors utiliser des paliers en forme de mâchoire, qu'il y a lieu de refermer sur les barres et de les y verrouiller grâce à des brides métalliques extérieures séparées, comme c'est le cas dans le document EP-A-0 132 502. Ces paliers sont par suite difficiles à réaliser.

Une adhérisation directe des paliers sur les barres a également été envisagée mais il s'agit là d'une opération difficile et qui en outre rend très problématique le rechange éventuel des paliers.

Le but de la présente invention est de résoudre ces problèmes sans avoir les inconvénients de la technique antérieure.

A cet effet, un palier de barre de torsion conforme à l'invention sera essentiellement caractérisé en ce qu'il comporte :

– un moyen de fermeture incorporé à ladite armature et permettant de la verrouiller sur la barre ; et

– un matelas de matériau élastique plus souple que lesdites nervures, solidaire extérieurement de ladite armature et propre à être bloqué dans un moyen de support du véhicule, ce matelas étant propre à travailler en torsion lors du fonctionnement de la barre.

On comprend que les nervures en matériau élastique (élastomère ou analogue) bloqueront efficacement le palier sur la barre, à la fois axialement et en torsion, tout en pouvant suivre les déformations en hélice de cette barre, lors du fonctionnement.

C'est cependant le matériau élastique dudit matelas, en principe plus épais que lesdites nervures, qui encaissera l'essentiel des débattements en torsion. En tout cas, on voit que ce type de palier conforme à l'invention évitera en fonctionnement le frottement, l'usure et les couinements qui affectent fréquemment les paliers connus.

De préférence, ledit moyen de fermeture de ladite armature est un moyen à encliquetage, prévu soit à l'opposé d'une charnière reliant d'un côté les deux demi-coquilles, soit de chaque côté de ces demi-coquilles et permettant un verrouillage irréversible sur ladite barre.

On assure ainsi une fixation très sûre du palier sur la barre. En cas de nécessité, on pourra cependant détruire le palier pour le changer, et en monter un nouveau à sa place sur la barre, cette dernière, qui est une pièce coûteuse, restant récupérable.

Selon encore une autre caractéristique de l'invention, on pourra encore prévoir que ledit matelas en matériau élastique présente extérieurement une forme profilée, de sorte à permettre le positionnement axial de l'armature par rapport à ladite barre.

Il pourra porter par exemple une saillie propre à venir, lors du montage, se loger dans un creux correspondant d'une pièce de montage solidaire du véhicule.

Par ailleurs, pour permettre de faciliter l'encliquetage du moyen de fermeture, il sera avantageux de prévoir que ledit matelas de matériau élastique laisse à découvert les extrémités de ladite armature.

Cela facilitera le pincement automatique de l'armature, et son verrouillage sur la barre, sans risquer de détériorer ledit matelas.

Dans le même but, on pourra prévoir également que ladite armature présente au niveau de son moyen de fermeture et sur chaque demi-coquille, des surfaces d'appui pour une pince ou analogue, accessibles au moins localement grâce à des encoches pratiquées dans ledit matelas.

Cela pourra faciliter l'encliquetage du moyen de fermeture, au moins dans la partie centrale de l'armature, dans le cas, en particulier, où ce moyen de fermeture -- par exemple du type à nervure et rainure de formes complémentaires s'encliquetant élastiquement -- s'étendrait selon toute la longueur de l'armature.

Deux modes d'exécution de l'invention vont maintenant être décrits à titre d'exemples nullement limitatifs, avec référence aux figures du dessin annexé dans lequel :

– la figure 1 est une vue en coupe transversale d'un palier à charnière conforme à l'invention, selon la ligne I-I de la figure 2 ;

– la figure 2 est une vue en coupe longitudinale et axiale de ce palier, selon la ligne II-II de la figure 1 ;

– la figure 3 est une vue en bout, le palier étant ouvert au lieu d'être fermé ;

– la figure 4 est une vue en coupe transversale partielle, et à plus grande échelle, montrant les moyens d'encliquetage de la fermeture à verrouillage irréversible ;

– la figure 5 est une vue en perspective de la seule armature du palier ; et

– la figure 6 est une vue en perspective analogue à celle de la figure 5, montrant une variante à armature sans charnière.

Sur les figures, on a référencé l'armature relativement rigide -- par exemple en matière plastique -- en 1. Elle est constituée de deux demi-coquilles semi-cylindriques 1a et 1b reliées par une charnière venue de moulage 2. Ces deux demi-coquilles peuvent se refermer sur une barre de torsion (non représentée) et y être verrouillées, à la fois axialement et en rotation, grâce à un moyen de fermeture à encliquetage s'étendant tout le long des bords libres de ces demi-coquilles, à savoir ceux qui sont opposés à la charnière 2. A cet effet, ce moyen de fermeture peut être constitué d'une nervure 3 du bord de la demi-coquille 1b, propre à s'encliqueter élastiquement, sans possibilité de sortie, dans une rainure de forme complémentaire 4, prévue dans le bord en regard de l'autre demi-coquille 1a.

On a référencé en 5 des nervures en élastomère solidaires de la face intérieure de l'armature 1 et qui s'étendent selon des génératrices des demi-coquilles 1a et 1b. Le rôle de ces nervures 5 a été décrit plus haut.

En 6, on a référencé un matelas de matériau élastique, également en élastomère, plus épais que les nervures 5, et qui est solidaire extérieurement de l'armature 1. Son rôle essentiel est de reprendre les déformations en torsion lors du fonctionnement de la barre. Grâce à une saillie centrale 7, il permet également de positionner axialement l'armature 1 par rapport à la barre de torsion, comme indiqué plus haut.

Enfin, il est à noter que pour permettre un clipsage facile du palier sur la barre, à l'aide d'une pince ou analogue, le matelas 6 laisse à découvert, en 8, les extrémités de l'armature 1. Dans le même but, les demi-coquilles 1a et 1b portent au niveau du moyen de fermeture 3, 4 des surfaces d'appui 9. Elles sont accessibles par des encoches 10 prévues aux emplacements voulus dans le matelas 6.

Le mode de réalisation qui vient d'être décrit peut quelquefois poser un problème quant au choix du matériau constituant l'armature 1. Pour réaliser un bon encliquetage du moyen de fermeture, il convient de prendre une matière relativement rigide, telle que du polyamide chargé ; mais alors cette matière peut s'avérer trop rigide au niveau de la charnière 2, qui requiert une certaine souplesse.

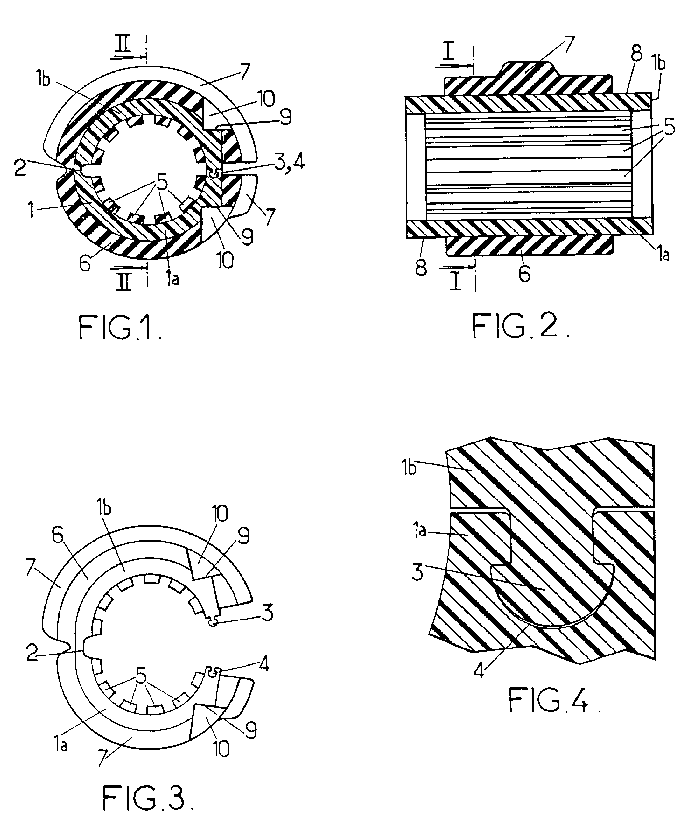

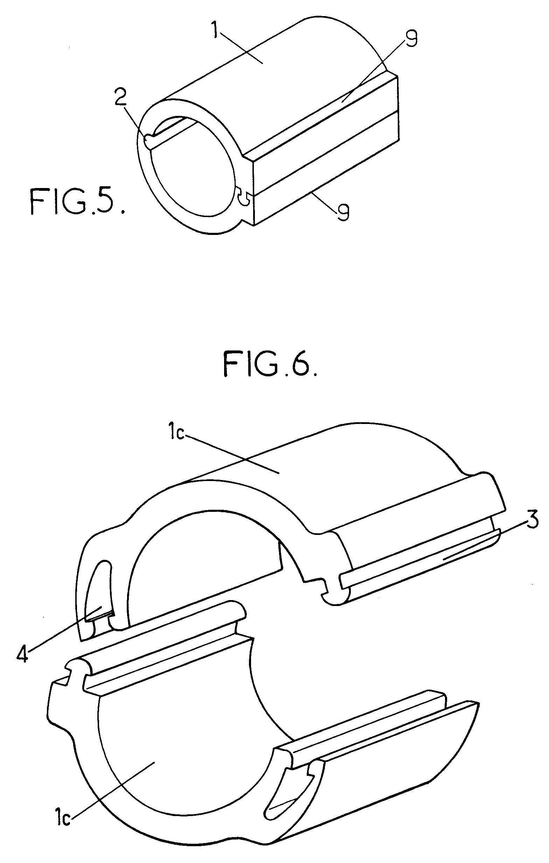

C'est pourquoi on a imaginé la variante sans charnière, à double encliquetage, représentée à la figure 6. Dans cette variante, l'armature 1 est constituée de deux demi-coquilles relativement rigides, de préférence identiques 1c, et pouvant s'encliqueter l'une dans l'autre en tête-bêche ; sur chaque bord des demi-coquilles, les moyens d'encliquetage peuvent être du même type général que celui qui est représenté à la figure 4, à savoir à nervure 3 et rainure d'accouplement complémentaire 4. Ce mode de réalisation présente aussi l'avantage de faciliter le montage de l'armature 1, puisqu'elle est alors constituée de deux demi-coquilles ouvertes et qui au surplus peuvent être exactement identiques. Ces deux demi-coquilles peuvent même être accouplées sans encliquetage à force, par glissement de chaque nervure 3 de l'une dans la rainure correspondante 4 de l'autre, si l'effort requis pour réaliser ce glissement n'est pas rendu excessif du fait des frottements.

On peut aussi imaginer de faire en sorte que d'un côté des demi-coquilles la nervure et la rainure encliquetées constituent ensemble une sorte de charnière, ce qui, comme dans le premier mode de réalisation décrit, permettrait de solidariser l'une de l'autre les deux demi-coquilles avant leur montage sur la barre, tout en leur permettant de pivoter légèrement l'une sur l'autre.

## Revendications

1. Palier de barre de torsion, en particulier de barre antidévers pour véhicule automobile, du type comprenant :

– une armature (1) relativement rigide, constituée de deux demi-coquilles (1a, 1b) opposées de forme générale semi-cylindrique lui permettant d'être montée puis refermée sur une barre de torsion, et

– des nervures (5) en matériau élastique, solidaires de la face intérieure de ladite armature (1) et s'étendant sensiblement selon des génératrices desdites demi-coquilles (1a, 1b), ces nervures (5) étant propres à pincer la barre lorsque ladite armature (1) est refermée sur elle ;

caractérisé en ce qu'il comporte :

– un moyen de fermeture (3, 4) incorporé à ladite armature et permettant de la verrouiller sur la barre ; et

– un matelas (6) de matériau élastique plus souple que lesdites nervures (5), solidaire extérieurement de ladite armature (1) et propre à être bloqué dans un moyen de support du véhicule, ce matelas (6) étant propre à travailler en torsion lors du fonctionnement de la barre.

2. Palier selon la revendication 1, caractérisé en ce que ledit moyen de fermeture de ladite armature (1) est un moyen (3, 4) à encliquetage, prévu à l'opposé d'une charnière (2) reliant les deux demi-coquilles et permettant leur verrouillage irréversible sur ladite barre.

3. Palier selon la revendication 1, caractérisé en ce que ledit moyen de fermeture comprend un moyen à encliquetage (3, 4) de chaque côté des demi-coquilles, lesquelles peuvent ainsi être identiques et s'encliqueter l'une sur l'autre en position tête-bêche.

4. Palier selon l'une quelconque des revendications 1 à 3, caractérisé en ce que ledit matelas en matériau élastique (6) présente extérieurement une forme (7) profilée, de sorte à permettre le positionnement axial de l'armature (1) par rapport à ladite barre.

5. Palier selon l'une quelconque des revendications précédentes, caractérisé en ce que ledit matelas (6) de matériau élastique laisse à découvert les extrémités de ladite armature (1).

6. Palier selon l'une quelconque des revendications précédentes, caractérisé en ce que ladite armature (1) présente au niveau de son moyen de fermeture (3, 4) et sur chaque demi-coquille (1a, 1b), des surfaces d'appui (9) pour une pince ou analogue, accessibles au moins localement grâce à des encoches (10) pratiquées dans ledit matelas (6).

**Patentansprüche**

1. Drehstablager, insbesondere für einen einer Schrägstellung entgegenwirkenden Drehstab für ein Kraftfahrzeug, das aus folgenden Teilen aufgebaut ist:

– einer relativ starren Armatur (1) aus zwei sich gegenüberliegenden Halbschalen (1a, 1b), die die allgemeine Form von Halbzylindern haben, die an einem Drehstab angebracht und dann um diesen geschlossen werden und

– Rippen (3) aus elastischem Material, die an der Innenseite der Armatur (1) angebracht sind und sich im wesentlichen gemäß den Erzeugenden der Halbschalen (1a, 1b) erstrecken, wobei die Rippen (5) den Drehstab einklemmen, wenn die Armatur (1) um den Drehstab geschlossen wird, dadurch gekennzeichnet, daß

– das Lager eine Verschlußeinrichtung (3, 4), die in die Armatur eingebaut ist und die Verriegelung an dem Drehstab ermöglicht und

– einen Mantel (6) aus elastischem Material enthält, das nachgiebiger ist als die Rippen (5) und an der Außenseite der Armatur (1) befestigt ist, wobei der Mantel an einer Abstützung des Fahrzeuges verriegelbar und in der Lage ist, während der Funktion des Drehstabes Torsionsarbeit zu leisten.

2. Drehstablager nach Anspruch 1, dadurch gekennzeichnet, daß der Verschluß der Armatur (1) aus einer Einrasteinrichtung (3, 4) besteht, die auf der einem die beiden Halbschalen miteinander verbindenden Scharnier (2) gegenüberliegenden Seite vorgesehen ist, und die die irreversibele Verriegelung der Armatur an der Stange sicherstellt.

3. Drehstablager nach Anspruch 1, dadurch gekennzeichnet, daß der Verschluß aus an beiden Endabschnitten der Halbschalen vorgesehenen Einrasteinrichtungen (3, 4) besteht, wobei die Halbschalen identisch ausgebildet sind und in einer Stellung, in der sie entgegengesetzt zueinander angeordnet sind, ineinander einrasten.

4. Drehstablager nach einem der Ansprüche 1 bis 3, dadurch gekennzeichnet, daß der aus elastischem Material bestehende Mantel (6) an der Außenseite ein Profil (7) aufweist, das die axiale Einstellung der Armatur (1) in Bezug auf den Drehstab sicherstellt.

5. Drehstablager nach einem der vorhergehenden Ansprüche, dadurch gekennzeichnet, daß die Enden der Armatur (1) von dem aus elastischem Material bestehenden Mantel (6) nicht bedeckt sind.

6. Drehstablager nach einem der vorhergehenden Ansprüche, dadurch gekennzeichnet, daß die Armatur (1) in Höhe des Verschlusses (3, 4) und an jeder Halbschale (1a, 1b) Stützflächen (9) für eine Zange oder dergleichen aufweist, die wenigstens örtlich über Ausnehmungen (10) in dem Mantel (6) zugänglich sind.

**Claims**

1. A torsion bar mount, in particular for an anti-roll bar for a motor vehicle, of the type comprising:

– a relatively rigid frame (1), consisting of two opposite half-shells (1a, 1b) which are generally cylindrical in shape, enabling it to be mounted and then closed up again on a torsion bar, and

– ribs (5) made from elastic material, integral with the internal face of the said frame (1) and extending approximately along the generatrices of the said half-shells (1a, 1b), these ribs (5) being suitable for gripping the bar when the said frame (1) is closed up on it;

characterised in that it comprises:

– a closing means (3, 4) incorporated in the said frame and enabling it to be locked on the bar; and

– a cushion (6) of elastic material more flexible than the said ribs (5), secured to the outside of the said frame and suitable for being locked in a vehicle support means, this cushion (6) being suitable for working in torsion during the functioning of the bar.

2. Mount according to claim 1, characterised in that the said means of locking the said frame (1) is a snap-in means (3, 4), provided opposite a hinge (2) connecting the two half-shells and enabling them to be locked irreversibly on the said bar.

3. Mount according to claim 1, characterised in that the said closing means comprises a snap-in means (3, 4) on each side of the half-shells, which can thus be identical and snap onto each other in a head to tail position.

4. Mount according to any one of claims 1 to 3, characterised in that the said cushion made from elastic material (6) has externally a profiled shape (7), so as to enable the frame (1) to be positioned axially with respect to the said bar.

5. Mount according to any one of the preceding claims, characterised in that the said cushion (6) of elastic material leaves the ends of the said frame (1) exposed.

6. Mount according to any one of the preceding claims, characterised in that the same frame (1) has, at its closing means (3, 4) and on each half-shell (1a, 1b), bearing surfaces (9) for a clip or similar, accessible at least locally because of notches (10) made in the said cushion (6).

FIG.1.

FIG.2.

FIG.3.

FIG.4.

FIG.5.

FIG.6.